Europäisches Patentamt

European Patent Office

Office européen des brevets

(19)

(11) Publication number: **0 313 887**
**A2**

(12) # EUROPEAN PATENT APPLICATION

(21) Application number: **88116458.6**

(22) Date of filing: **05.10.88**

(51) Int. Cl.⁴: **G21C 13/06**

.The title of the invention has been amended (Guidelines for Examination in the EPO, A-III, 7.3).

(30) Priority: **30.10.87 US 115078**

(43) Date of publication of application:
**03.05.89 Bulletin 89/18**

(84) Designated Contracting States:
**BE CH ES FR GB IT LI SE**

(71) Applicant: **WESTINGHOUSE ELECTRIC CORPORATION**
**Westinghouse Building Gateway Center**
**Pittsburgh Pennsylvania 15222(US)**

(72) Inventor: **Niewoehner, Richard William**
**124 Brookside Boulevard**
**Pittsburgh Sylvania 15241(US)**

(74) Representative: **Patentanwälte Dipl.-Ing. R. Holzer Dipl.-Ing. (FH) W. Gallo**
**Ludwigstrasse 26**
**D-8900 Augsburg(DE)**

(54) **One-piece temporary gap seal between reactor vessel and closure head.**

(57) In a nuclear reactor pressure vessel (10) disposed in a rector cavity (4), a wedge-shaped seal (150) for temporarily sealing a gap (80) defined by the bottom surface (70) of a reactor pressure vessel closure head flange (60) and an opposing top surface (36) of a reactor pressure vessel lower shell (20). The seal (150) may be a one-piece elastomeric circular ring member (151) having a truncated triangle cross-sectional configuration for slidably sealingly interposing the gap seal (150) between the bottom surface (70) and the top surface (36). The gap seal (150) thus seals the gap (80) against water intrusion during high pressure water spray decontamination of the reactor cavity (4).

FIG.5

# ONE-PIECE TEMPORARY GAP SEAL

## TECHNICAL FIELD

The present invention relates generally to seals for a nuclear reactor pressure vessel which is disposed in a reactor cavity, and more particularly relates to a one-piece temporary gap seal for temporarily sealing a gap defined by the bottom surface of a reactor pressure vessel closure head flange and an opposing top surface of a reactor pressure vessel lower shell so that the gap is sealed against moisture intrusion during high pressure water spray decontamination of the reactor cavity.

## BACKGROUND OF THE INVENTION

A nuclear reactor pressure vessel is an apparatus for fissioning fissile material, such as uranium-235, to produce heat. The heat, which is transferred to a coolant circulating through the pressure vessel, is in turn transferred by the circulating coolant to a turbine-generator, which transforms the heat into useful work for generating electricity in a manner well known in the art of nuclear power production.

The pressure vessel, which is disposed in a reactor cavity that is located in a reactor containment building, comprises a generally cylindrical pressure vessel lower shell closed at the bottom end and open at its top end. The pressure vessel further comprises a generally hemispherical pressure vessel upper shell attached to the top end of the lower shell for capping the lower shell. The upper shell, which is commonly referred to in the art as a closure head, is disposed in a water-tight upper chamber of the reactor cavity and the lower shell is disposed in a lower chamber of the reactor cavity. Located in the lower shell is a nuclear reactor core containing the fissile material which is housed in a plurality of cylindrical fuel rods bundled together to define a plurality of fuel assemblies. As the fissile material fissions, radioactive nuclides are produced and high energy neutrons and heat due to fission are generated. During the fission process, the fissile material, which may be intermixed in a matrix of fertile material such as uranium-238, is depleted by the fission process. After the fissile material is sufficiently depleted, some fuel assemblies having the fissile and fertile materials therein are replaced by less depleted fuel assemblies during a refueling operation.

To increase thermal efficiency during reactor operation, the pressure vessel is pressurized to a predetermined pressure, such as 16 MPa; thus, the internal pressure of the pressure vessel is greater than the external pressure surrounding the pressure vessel. Pressure vessel locations where there is an interface between the internal pressure of the pressure vessel and the external pressure surrounding the pressure vessel are commonly referred to in the art as pressure boundaries. Because the internal pressure of the pressure vessel is greater than the external pressure surrounding the pressure vessel, radioactive coolant and gasses might escape the pressure vessel were it not for the pressure vessel being sealed at each pressure boundary position by a seal located in the pressure vessel. In this regard, at least one O-ring seal is typically interposed between the bottom surface of the closure head and the top surface of the lower shell for sealing the pressure vessel at that location so that radioactive coolant and gasses will not escape into the area surrounding the pressure vessel when the pressure vessel is pressurized.

Formed in the top surface of the lower shell is a flat surface on which the closure head-mounted O-rings seat, so that when the closure head is fastened to the lower shell, the O-rings seal the pressure vessel. However, on the outboard side of the outer-most O-ring, the top surface of the lower shell is exposed to the atmosphere surrounding the pressure vessel and thus may oxidize or rust. By a process described hereinafter, these rust particles may migrate to the seating surface and lessen the ability of the O-ring seal to seal the pressure vessel.

At times it is necessary to raise the closure head from the lower shell. This is necessary, for example, at regular intervals for refueling the reactor core. In addition, it may be infrequently necessary to detach and raise the closure head from the lower shell for inspecting, repairing or replacing pressure vessel internal components disposed in the pressure vessel. Prior to raising the closure head, the fission process is stopped and the reactor is depressurized. After raising the closure head, the water-tight upper chamber of the reactor cavity is then flooded with water to provide a biological shield to protect personnel from radioactivity emanating from the reactor core and internal components. This flooded condition is maintained until just prior to the closure head being reinstalled on the lower shell following the refueling operation or following the inspection or repair of the internal components. After draining water from the upper chamber of the reactor cavity, a residual layer of radioactive particulate matter may be deposited on the upper chamber walls, thereby contaminating the upper chamber walls. Therefore, after the upper chamber is drained, a water lance capable of spraying water at high pressure may be introduced into the upper chamber for washing away the particulate matter, thereby decontaminating the upper chamber walls.

However, as indicated hereinabove the upper surface of the pressure vessel, outboard of the O-ring seating surface, may have small particulates of rust thereon, thereby permitting the small particulates of rust on this surface to be washed onto the seating surface for the O-rings during the decontamination process. This may occur because the O-rings do not seat on the lower shell until the closure head bolt-down process is performed following decontamination. These rust particles, which may migrate onto the O-ring seating surface when the high pressure water flows through the gap and onto the seating surface, may degrade the O-ring seal and lessen the sealing ability of the O-ring seal, and thus may cause leakage of radioactive coolant and gasses into the area surrounding the pressure vessel. when the pressure vessel is repressurized. The possibility of the rust particles migrating onto the seating surface necessitates relifting the closure head after the decontamination process and before the pressure vessel is repressurized for inspecting the O-ring seal and seating surface to ensure that the sealing ability of the O-ring seal is not lessened. Consequently, to maintain the sealing ability of the O-ring seals it is desirable to prevent the deposition of rust deposits onto the seating surface during the high pressure water spray decontamination process. In this regard, one prior art approach to this problem was to place a fiber rope, extending circumferentially around the gap, into the gap for sealing the gap. However, this approach was time consuming and may not have provided suitable sealing of the gap. Thus, a problem in the art has been to provide suitable seal means for sealing the gap in an effective and cost efficient manner.

U.S. Patent No. 3,929,253 issued December 30, 1975 to Erik Borge Johnsson and entitled "Method of Arranging A Seal Between A Pressure Vessel, Preferably A Reactor Vessel, And Its Lid By Means of A Torrid Ring Provided With Flanges" discloses a seal between a pressure vessel and its lid, which rests on a ledge in the vessel. The Johnsson device comprises a toroid ring with inner and outer flanges, wherein the toroid ring is positioned such that the ring is placed both on top of the lid and on top of a collar in the vessel. The inner flange of the toroid rests on a shoulder on the lid and the outer flange rests on the collar in the vessel. The outer toroid flange is clamped to the collar, preferably by means of radially displaceable clamps. Thus, it appears that the Johnsson device includes not only the flanged toroid ring, but also includes at least one clamp wherein the toroid ring and clamp are intended to be permanently affixed to the pressure vessel when the reactor is operating. It appears that the Johnsson patent does not disclose a one-piece temporary seal capable of surrounding the gap defined by the bottom surface of a closure head flange and an opposing top surface of a pressure vessel lower shell as herein provided.

A seal for large rotatable covers of nuclear reactors containing protective gas and cooled with sodium is disclosed in U.S. Patent No. 3,717,352, issued February 20, 1973 to W. Jansing et al. The cover is formed of a radially outer rotatable cover portion and a radially inner cover portion mutually connected by a plurality of peripherally distributed screws. The reactor has a flanged opening closable by the cover. The seal comprises a removable outer ring surrounding the outer rotatable cover portion and is threadedly secured to the flange of the reactor. A pair of spaced-apart inflatable hollow sealing rings surrounding the outer cover portion are received in the outer ring. A protective gas connection located in the space between the sealing rings supplies the protective gas to the reactor through the space between the sealing rings. Thus, the Jansing et al. patent appears to disclose an inflatable hollow seal for sodium-cooled reactors containing a protective gas, wherein the seal includes multiple elements and is intended to be permanently installed when the reactor is operating. Therefore, the Jansing et al. patent does not appear to disclose the one-piece temporary seal described and claimed herein.

Yet another seal is disclosed in U.S. Patent No. 4,356,144 issued October 26, 1982 to Ki C. Cheung et al. and entitled "Closure Hold-Down System For A Reactor Vessel". The Cheung et al. device comprises an omega seal disposed between a closure plug and a cavity liner to prevent escape of fluid pressure from the cavity. The omega seal has an inverted U-shaped transverse sectional configuration. Annular concentric edges of the omega seal are suitably secured, as by bimetallic weld beads, to a support flange on the cavity liner and to a mounting flange on the closure plug, respectively. Hence, the Cheung et al. patent appears to disclose a seal which has an inverted U-shaped transverse sectional configuration and which is permanently attached to the reactor when the reactor is operating. However, the Cheung et al. patent does not appear to disclose a temporary seal. Moreover, the Cheung et al. patent does not appear to disclose a temporary seal having the transverse cross-sectional configuration as provided by the present invention.

Consequently, although the prior art discloses sealing devices for use in nuclear reactors, the prior art does not appear to disclose a one-piece temporary gap seal for sealing the gap defined by the bottom surface of a closure head flange and an opposing top surface of a reactor pressure vessel lower shell as specified hereinbelow.

Therefore, what is needed is a one-piece temporary gap seal for temporarily sealing a gap defined by the bottom surface of a closure head flange and an opposing top surface of a reactor pressure vessel lower shell so that the gap is sealed against moisture intrusion during high pressure water spray decontamination of the reactor cavity.

## DISCLOSURE OF THE INVENTION

Disclosed herein for use in a nuclear reactor pressure vessel which is disposed in a reactor cavity is a one-piece temporary gap seal for temporarily sealing a gap defined by the bottom surface of a nuclear reactor pressure vessel closure head flange, which flange integrally surrounds the lower portion of a pressure vessel closure head, and an opposing top surface of a reactor pressure vessel lower shell so that the gap is sealed against moisture intrusion during high pressure water spray decontamination of the reactor cavity. The closure head flange is integrally connected to and surrounds the lower portion of a hemispherical closure head which is mounted on the top end of the lower shell and attached thereto by a plurality of peripherally distributed hold-down bolts. Interposed between the bottom surface of the closure head and the top surface of the lower shell is at least one O-ring seal seated on a seating surface formed in the top surface of the lower shell. The closure head is disposed in an upper chamber of a reactor cavity and the lower shell is disposed in a lower chamber of the reactor cavity, which reactor cavity is located in a reactor containment building.

During operation of the reactor, a portion of the top surface of the lower shell is exposed on the outboard side of the O-ring seal to the atmosphere surrounding the pressure vessel and thus may have oxidized forming rust particles. During decontamination of the reactor cavity walls a water lance is introduced into the upper chamber for spraying water under high pressure onto the reactor cavity walls. The rust particles referred to above may migrate to the seating surface if the rust particles are subjected to the hydraulic force of the high pressure water spray from the water lance. If the rust particles migrate to the seating surface, the seals may become degraded and the sealing ability of the O-ring seals may be lessened. Therefore, a one-piece elastomeric seal, which may have a truncated triangle transverse cross sectional configuration, is interposed between the bottom surface of the closure head flange and the top surface of the lower shell on the outboard side of the O-ring seal for sealing the gap during the decontamination process. After completion of the decontamination process, the gap seal is removed from the gap.

## BRIEF DESCRIPTION OF THE DRAWINGS

While the specification concludes with claims particularly pointing out and distinctly claiming the subject matter of the invention, it is believed the invention will be better understood from the following description, taken in conjunction with the accompanying drawings wherein:

Fig. 1 is a view in partial vertical section of a reactor pressure vessel disposed in a reactor cavity;

Fig. 2 is a view in partial vertical section of a reactor pressure vessel lower shell disposed in the reactor cavity;

Fig. 3 is a view in partial vertical section of the reactor pressure vessel illustrating a gap seal sealing a gap defined by the bottom surface of a closure head flange and an opposing top surface of the lower shell;

Fig. 4 is a view in partial vertical section of the closure head flange and the lower shell showing the gap seal sealing the gap and showing a water lance disposed nearby;

Fig. 5 is a view in partial vertical section of a portion of the closure head flange, lower shell and gap seal showing the gap seal sealing the gap;

Fig. 6 is a view in partial vertical section of the gap seal sealing the gap, wherein the gap seal has an inflatable hollow core;

Fig. 7 is a view in partial vertical section of the gap seal sealing the gap, wherein the gap seal has a vertical gap seal flange;

Fig. 8 is a view in partial vertical section of the gap seal sealing the gap, wherein the gap seal has a vertical gap seal flange and an inflatable hollow core;

Fig. 9 is a view in partial vertical section showing a slanted gap seal sealing the gap; and

Fig. 10 is a view in partial vertical section illustrating the slanted gap seal sealing the gap, wherein the slanted gap seal has an inflatable hollow core.

## DESCRIPTION OF THE PREFERRED EMBODI-
### MENT

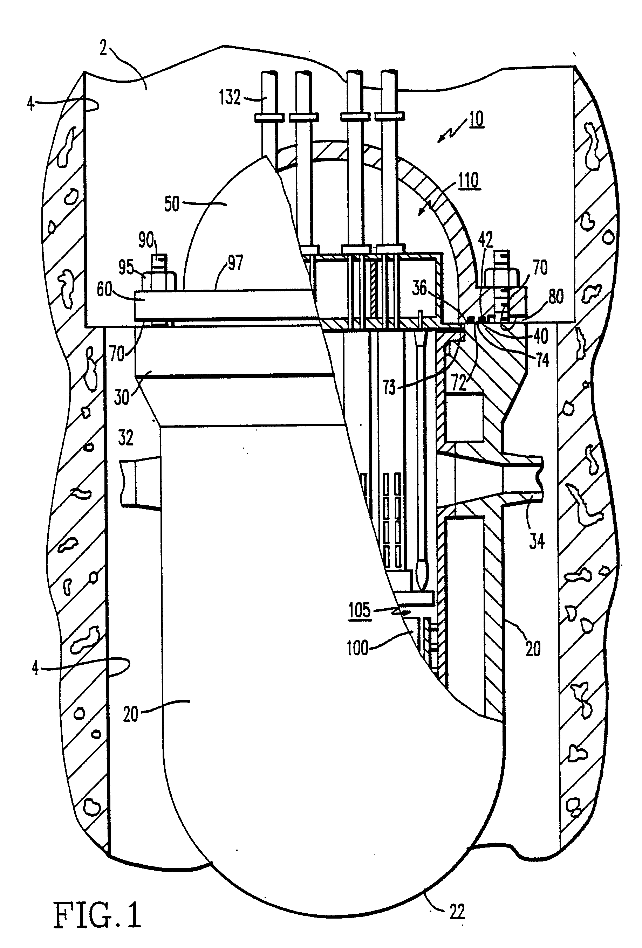

Referring to Fig. 1, disposed in a reactor cavity 4 is a nuclear reactor pressure vessel, generally referred to as 10, comprising a generally cylindrical pressure vessel lower shell 20 having a closed bottom end 22 and an open top end 30 and having a coolant inlet nozzle 32 and a coolant outlet nozzle 34 disposed thereon. Formed in a top surface 36 of top end 30 is a seating surface 40 extending around top surface 36 for receiving an O-ring seal 42 thereon, which O-ring seal 42 is capable of sealing pressure vessel 10 at that location. Mounted on top end 30 is a generally hemispherical pressure vessel closure head 50 for capping lower shell 20, which closure head 50 has an integrally attached closure head flange 60 extending around the periphery of the lower portion thereof. The bottom end of closure head flange 60 has a bottom surface 70 disposed a predetermined distance above a bottom end 72 of closure head 50. Formed in a bottom surface 73 of bottom end 72 is at least one O-shaped groove 74 extending around bottom surface 73 for receiving the O-ring seal 42 therein. Thus, bottom surface 70 of closure head flange 60 is spaced above top surface 36 in opposing relationship so that a gap 80 is defined therebetween when closure head 50 is mounted on top end 30. Closure head 50 is attached to top end 30 by a plurality of threaded elongated hold-down bolts 90 each adapted to threadably receive a hold-down nut 95 thereon, wherein the plurality of hold-down bolts 90 are peripherally distributed around closure head flange 60 and threadably inserted into top end 30 for securely attaching closure head 50 to lower shell 20. In order to securely attach closure head 50 to top end 30, hold-down nut 95 is threadably run-down hold-down bolt 90 until hold-down nut 95 engages a flange top surface 97 of closure head flange 60.

Still referring to Fig. 1, a plurality of elongated rectangular fuel assemblies 100 each comprising a plurality of elongated fuel rods (not shown) which have a matrix of fissile and fertile materials contained therein is disposed in lower shell 20 for producing heat by fission of the fissile material. The plurality of fuel assemblies 100 define a nuclear reactor core generally referred to as 105. The fission process is controlled by reciprocating movement of a plurality of neutron absorbing control rods (not shown) which are capable of being slidably disposed into each fuel assembly 100. Each control rod is connected to a control rod drive assembly generally referred to as 110 for obtaining the reciprocating movement of each control rod along the longitudinal axis of each fuel assembly 100. Each control rod drive assembly is capable of stopping and resuming the fission process by controlling the reciprocating movement of the control rods in a manner well known in the art of nuclear power production.

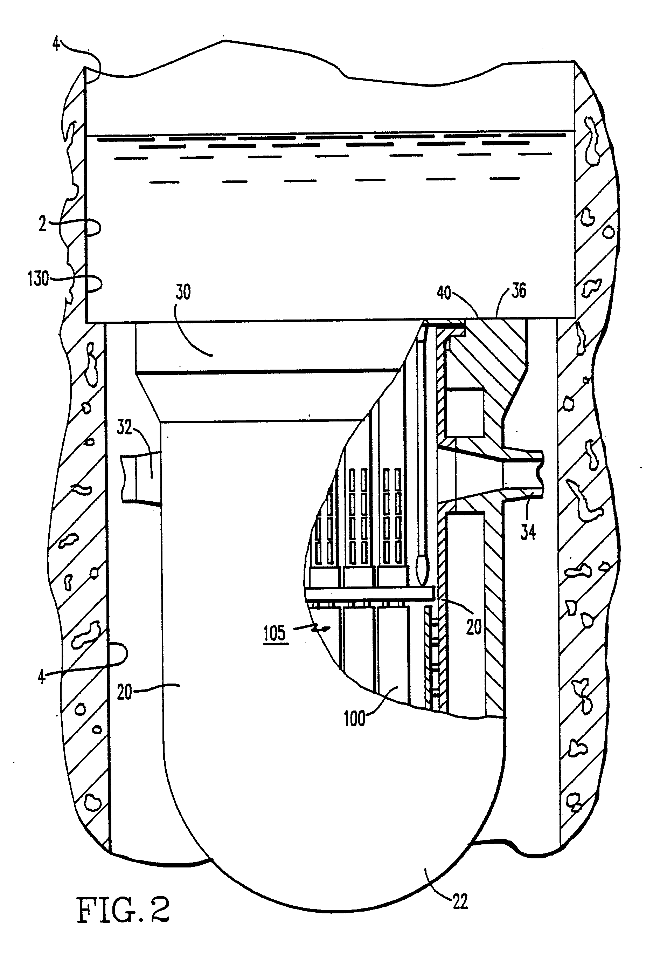

Referring to Fig. 2, lower shell 20 is shown with closure head 50 removed. At times it is necessary to remove closure head 50 from lower shell 20. This is necessary, for example, at regular intervals for refueling reactor core 105 which is disposed in lower shell 20. Infrequently, it may be necessary to remove closure head 50 for inspecting or repairing the pressure vessel internal components. Closure head 50 is removed from lower shell 20 by removing hold-down nut 95 from each hold-down bolt 90 (see Fig. 1) and attaching closure head 50 to a movable overhead crane (not shown) which is capable of lifting closure head 50 and relocating closure head 50 in a predetermined location near pressure vessel 10 in the reactor containment building. After closure head 50 is removed from top end 30, upper chamber 2, which is water-tight, is flooded with water as shown in Fig. 2, for providing a biological shield to protect personnel during refueling of reactor core 105 or during repair or inspection of the pressure vessel internal components. Following refueling or following repair or inspection of the pressure vessel internal components upper chamber 2 is drained, and closure head 50 is then lowered onto top end 30 of lower shell 20 and reattached thereto. However, as upper chamber 2 is drained of water, a residual layer of particulate matter, which may be radioactive, may be deposited on a plurality of walls 130 which define upper chamber 2.

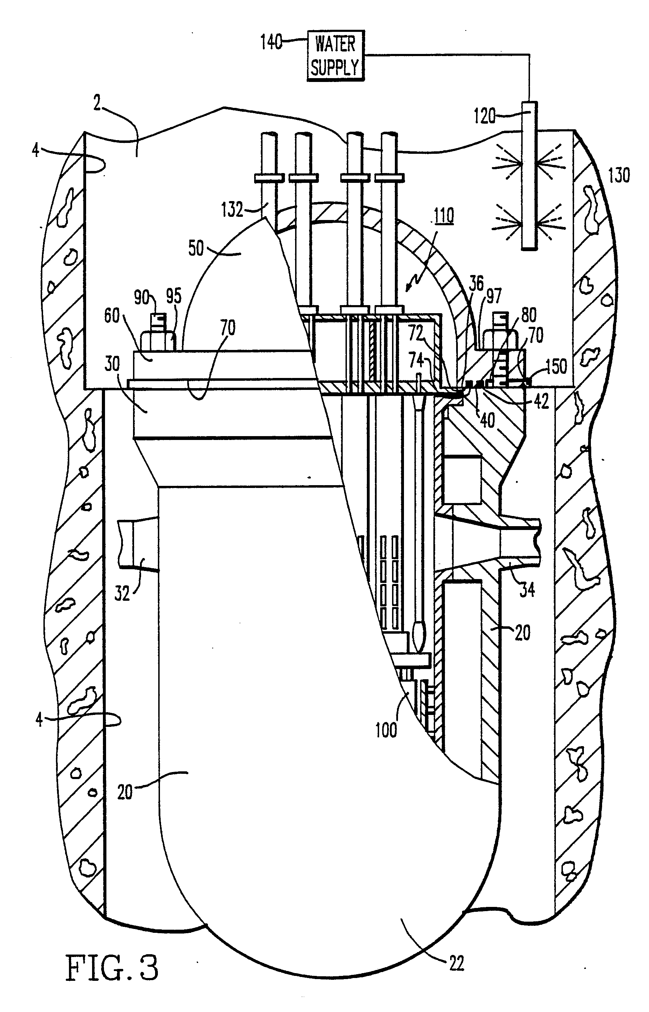

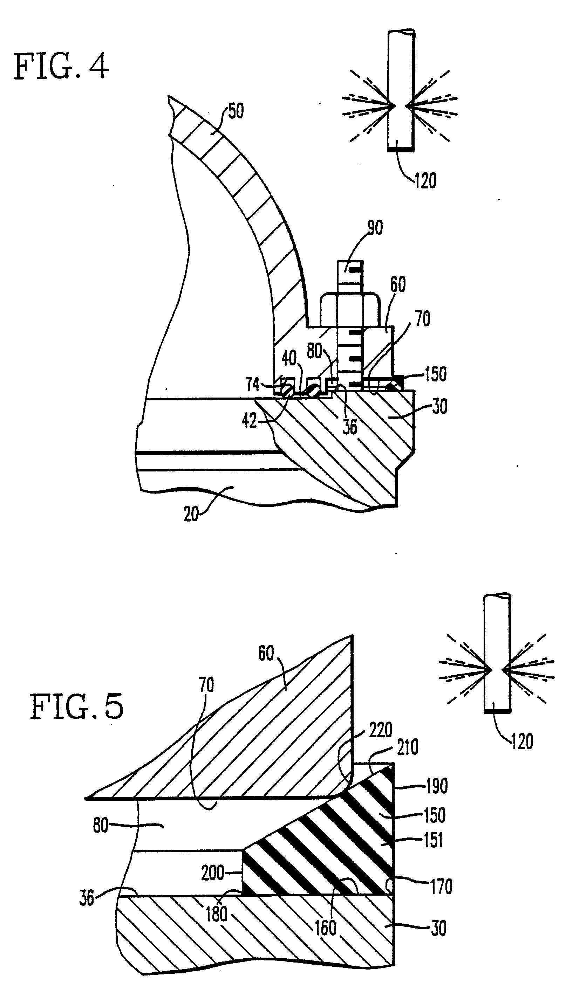

Referring now to Figs. 3 and 4, after the water is drained from upper chamber 2, upper chamber 2 having closure head 50 disposed therein is sprayed with high pressure water from a water lance 120 which is in communication with a water supply 140 for washing away radioactive particulate matter from walls 130. It will be appreciated that closure head 50 contains electro-mechanical penetrations 132 that are connected to the control rods. Therefore, during this portion of the decontamination process, these penetrations are shielded from the water spray by a curtain (not shown) for repelling the water. The curtain surrounds closure head 50 and may be suspended from the overhead crane. Interposed between top surface 36 and bottom surface 70 of closure head flange 60 is seal means for sealing gap 80, which seal means may be a one-piece temporary gap seal 150 for temporarily sealing gap 80, so that water spray from water lance 120 can not enter gap 80. It will be appreciated that gap seal 150 should completely surround gap 80 for sealing gap 80. If gap 80 were not sealed, the force of the water spray from water lance 120 might cause rust deposits resting on top surface 36, on the out-board side of the O-ring seal, to migrate onto seating surface 40, thus lessening the ability of O-ring seal 42 to adequately seal pressure vessel 10 in the location of the O-ring seal when pressure vessel 10 is repressurized.

As shown in Fig. 5, in the preferred embodiment of the invention, gap seal 150 is a continuous one-piece circular elastomeric ring member 151, which may have an inside diameter slightly less than the outside diameter of flange 60 and an outside diameter greater than the inside diameter of ring member 151 when no external forces are acting on ring member 151. Alternatively, gap seal 150 may be a flexible one-piece linear elastomeric strip member capable of being formed into a circular ring. In the preferred embodiment gap seal 150, which may be 40-50 durometer silicone or "BUNA-N" may have a truncated right triangle transverse cross sectional configuration for sealing gaps of different sizes. The transverse cross section includes a horizontal bottom surface 160 for reposing gap seal 150 on top surface 36, which bottom surface 160 has an outer edge 170 and an inner edge 180, wherein inner edge 180 is disposed nearer the vertical axis of gap seal 150 than outer edge 170. Bottom surface 160 may be approximately 31.75 mm long in cross section. Perpendicular to outer edge 170 and extending upwardly therefrom is outer surface 190, which may be approximately 25.4 mm high. Perpendicular to inner edge 180 and extending upwardly therefrom is inner surface 200, which may be approximately 7.87 mm high. Downwardly extending from the top end of outer surface 190 to the top end of inner surface 200 is a declining top surface 210, which may be approximately 40.64 mm long, for abutting a bottom corner edge 220 of closure head flange 60 thereagainst. When top surface 210 everywhere abuts corner edge 220, gap 80 is sealed thereby. It will be appreciated that the truncated right triangle transverse cross section of gap seal 150 allows gap seal 150 to be wedged into gap 80 so that gaps of different widths can be sealed. Gaps of different widths can be sealed because corner edge 220 advances upwardly along top surface 210 and corner edge 220 slidably engages top surface 210 as gap seal 150 is inserted into gap 80. When gap seal 150 is used to seal a gap 80 of relatively larger width, corner edge 220 advances upwardly along top surface 210 to a further extent. On the other hand, when gap seal 150 is used to seal a gap 80 of rela tively smaller width, corner edge 220 advances upwardly along top surface 210 to a lesser extent.

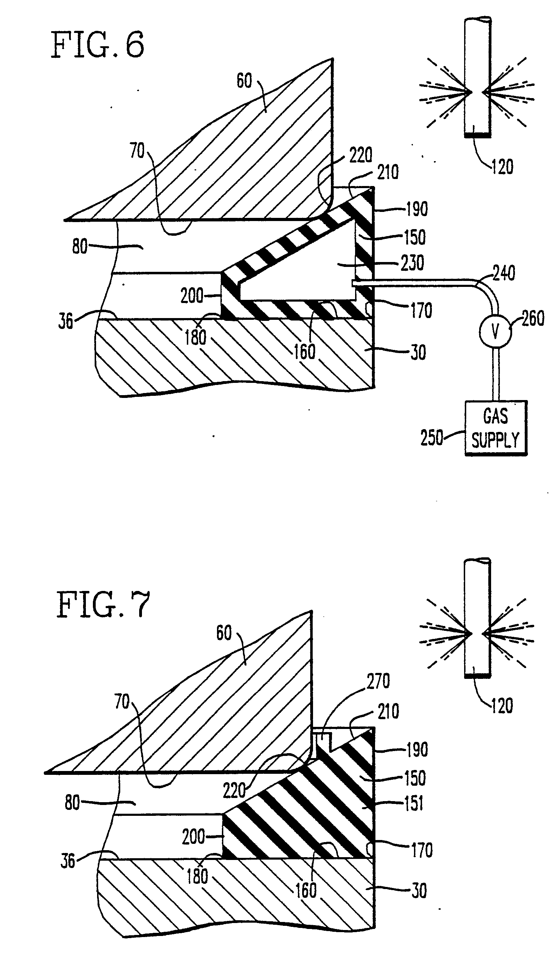

An alternative embodiment of gap seal 150 is illustrated in Fig. 6, wherein a hollow core 230 is formed in gap seal 150 for inflatably engaging top surface 210 in abutting relation with corner edge 220 so that gap 80 is sealed thereby. Hollow core 230 may be in communication with a gas conduit 240 which in turn may be in communication with a gas supply 250 for supplying gas to hollow core 230 so that the gas inflates gap seal 150. Connected to gas conduit 240 is a suitable gas regulator 260 for regulating the flow of gas to hollow core 230.

In Fig. 7 is illustrated another embodiment of gap seal 150, wherein gap seal 150 includes a vertical gap seal flange 270 having an end thereof integrally connected to top surface 210 for deflecting moisture spray away from gap 80, which gap seal flange 270 extends around top surface 210 of gap seal 150.

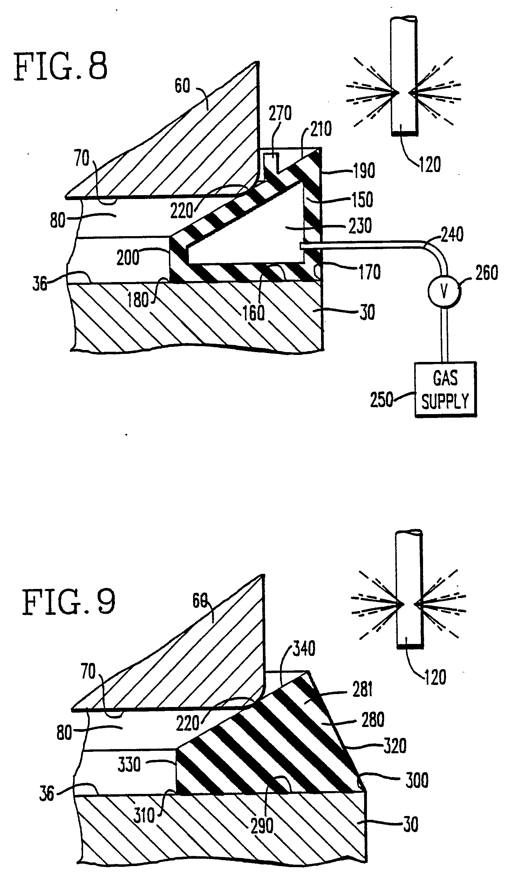

Fig. 8 shows another embodiment of gap seal 150 having gap seal flange 270 integrally connected thereto, wherein hollow core 230 is formed in gap seal 150 for inflatably engaging top surface 230 in abutting relation with corner edge 220 so that gap 80 is sealed thereby. Hollow core 230 may be in communication with gas conduit 240 which in turn may be in communication with gas supply 250 for supplying gas to hollow core 230 so that the gas inflates gap seal 150. Connected to gas conduit 240 is gas regulator 260 for regulating the flow of gas to hollow core 230.

In accordance with the invention, yet another embodiment is illustrated in Fig. 9, wherein a slanted gap seal 280 seals gap 80. Slanted gap seal 280 comprises a one-piece circular elastomeric slanted ring member 281 having a truncated triangle transverse cross sectional configuration, which slanted ring member 281 may have an inside diameter slightly less than the outside diameter of closure head flange 60 and an outside diameter greater than the inside diameter of ring member 281 when no external forces are acting on ring member 281. The transverse cross section includes a horizontal bottom surface 290 for reposing gap seal 280 on top surface 36, which bottom surface 290 has an outer edge 300 and an inner edge 310, wherein inner edge 310 is disposed nearer the vertical axis of slanted gap seal 280 than outer edge 300. Integrally connected to outer edge 300 is an inwardly inclining outer surface 320 upwardly extending from outer edge 300. Perpendicular to inner edge 310 and extending upwardly therefrom is a vertical inner surface 330. Downwardly extending from the top end of outer surface 320 to the top end of inner surface 330 is a declining top surface 340 for abutting corner edge 220 thereagainst.

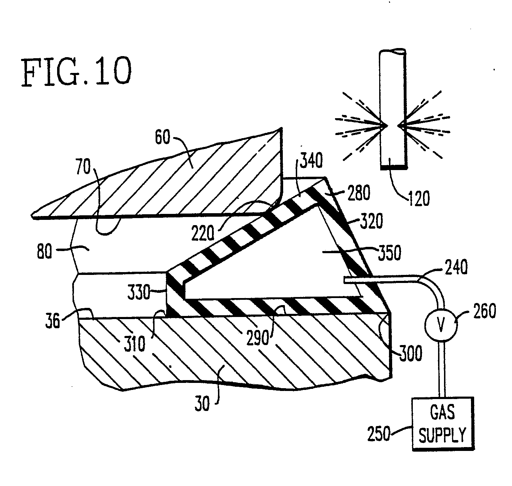

Fig. 10 shows yet another embodiment of slanted gap seal 280, wherein a hollow core 350 is formed therein for inflatably engaging top surface 340 in abutting relation with corner edge 220 so that gap 80 is sealed thereby. Hollow core 350 is in communication with gas conduit 240 which in turn is in communication with gas supply 250 for supplying gas to hollow core 350 so that slanted gap seal 280 is inflated thereby. Connected to gas conduit 350 is gas regulator 250 for regulating the flow of gas to hollow core 350.

As indicated hereinabove, in order to refuel reactor core 105 or to inspect or repair the pressure vessel internal components, access to the interior of pressure vessel 10 is acquired by removing hold-down nuts 95 from hold-down bolts 90 and then removing hold-down bolts 90 from closure head flange 60. Closure head 50 is then raised from lower shell 20 and removed from upper chamber 2 by the overhead crane (not shown) which is capable of being detachably connected to closure head 50. However, after closure head 50 is raised, upper chamber 2, which is water-tight, is flooded with water for providing a biological shield to protect personnel from radioactivity emanating from reactor core 105 and the pressure vessel internal components while closure head 50 remains raised from lower shell 20.

Following the refueling of reactor core 105 or following the inspection or repair of the pressure vessel internal components, gap seal 150 or slanted seal 280 is disposed around closure head flange 60 while closure head 50 remains raised from lower shell 20. Gap seal 150 or slanted gap seal 280 is disposed around closure head flange 60 such that bottom surface 160 or 290 of gap seal 150 or 280, respectively, faces in the direction of top surface 36. Gap seal 150 or slanted gap seal 280 may be manually disposed around closure head flange 60 by manually gripping gap seal 150 or 280 and placing gap seal 150 or 280 in sufficient tension so that gap seal 150 or 280 may be slidably disposed around closure head flange 60 from beneath closure head 50. After upper chamber 2 is drained of water, closure head 50 is then remounted onto pressure vessel 10 and hold-down bolts 90 are reinserted through flange 60 and into top end 30 whereupon hold-down nuts 95 are threadably run-down hold-down bolts 90 until hold-down nuts 95 engage flange top surface 97 of closure head flange 60.

Next, either gap seal 150 or slanted gap seal 280 is again gripped, which may be by manually gripping, such that gap seal 150 or 280 may be slidably lowered down closure head flange 60 and slidably interposed between bottom surface 70 and top surface 36 so that top surface 210 or 340 respectively is everywhere in abutting relation with corner edge 220 for sealing gap 80. Moreover, gap seal 150 or slanted gap seal 280, having hollow core 230 or 350 respectively therein, may be inflated with gas or fluid either before or after gap seal 150 or slanted gap seal 280 is slidably disposed in gap 80. Disposing gap seal 150 or slanted gap seal 280 into gap 80 seals gap 80 against the intrusion of moisture therein from water lance 120.

As stated hereinabove, as upper chamber 2 is drained of water, radioactive particulate matter may be deposited on walls 130 of upper chamber 2. Therefore, after gap seal 150 or slanted gap seal 280 is disposed in gap 80, water lance 120 is introduced into upper chamber 2 for washing away the radioactive particulate matter on walls 130 by spraying water at high pressure thereby decontaminating walls 130. Because either gap seal 150 or slanted gap seal 280 now seals gap 80, water from water lance 120 is precluded from entering gap 80.

When the decontamination process described hereinabove is complete, water lance 120 is withdrawn from upper chamber 2. Gap seal 150 or slanted gap seal 280 then may be removed from gap 80 by cutting-through gap seal 150 or slanted gap seal 280 with a knife or the like and pulling gap seal 150 or slanted gap seal 280 outwardly with the aid of a hook or similar instrument. Closure head 50 is then bolted to closure head flange 60. Gap seal 150 or 280 then may be disposed of in a manner suitable for disposal of radioactive waste.

Although the invention is illustrated and described herein in a plurality of embodiments, it is not intended that the invention as illustrated and described be limited to the details shown, since various modifications may be obtained with respect to the invention without departing from the spirit of the invention or the scope of equivalents thereof.

Therefore, this invention provides a one-piece temporary gap seal for sealing the gap defined by the bottom surface of a reactor pressure vessel closure head flange and an opposing top surface of a reactor pressure vessel lower shell, so that the gap is sealed during high pressure water spray decontamination of the reactor cavity.

## Claims

1. In a nuclear reactor a temporary gap seal (150) for temporarily sealing a gap (80) during decontamination, comprising: a reactor pressure vessel lower shell (20) having an open top end (30) having a top surface (36); a reactor pressure vessel closure head (50) having an open bottom end (72), said closure head (50) mounted on the top end (30) of said lower shell (20) for capping said lower shell (20); a reactor pressure vessel closure head flange (60) integrally connected to said closure head (50) and surrounding the lower portion thereof, wherein the bottom end (30) of said closure head flange (60) is spaced above the bottom end (72) of said closure head (50) and wherein the bottom end of said closure head flange (60) is spaced above the top end (20) of said lower shell (20) in opposing relation, thereby defining the gap (80) between the bottom end (30) of said closure head flange (60) and the top end (30) of said lower shell (20); the gap seal (150) characterized by a horizontal substantially circular ring member (151) surrounding the gap (80) for sealing the gap (80).

2. The gap seal (150) according to claim 1, wherein said ring member (151) is substantially wedge-shaped.

3. The gap seal (150) according to claim 1, wherein said ring member (151) has a truncated right triangle transverse cross sectional configuration.

4. The gap seal (150) according to claim 3, wherein the cross sectional configuration has a horizontal bottom surface (160) capable of resting on the top surface (36) of the lower shell (20) for reposing said ring member (151) on the top surface (36) of said lower shell (20) and wherein the bottom surface (160) of the cross sectional configuration has an outer edge (170) and an opposing inner edge (180), the inner edge (180) disposed nearer the vertical axis of said ring member (151) than the outer edge (170).

5. The gap seal (150) according to claim 3, wherein said cross section has a vertical outer surface (190) extending upwardly from the outer edge (170).

6. The gap seal (150) according to claim 3, wherein said cross section has a vertical inner surface (20) extending upwardly from the inner edge (180) a distance less than said outer surface (190).

7. The gap seal (150) according to claim 3, wherein the cross sectional configuration has a declining top surface (210) downwardly extending from the top of said outer surface (190) to the top of said inner surface (200) for abutting said top surface (210) of said ring member (151) against a bottom corner edge (220) of said closure head flange (60) so that the gap (80) is sealed thereby.

8. The gap seal (150) according to claim 1, wherein said ring member (151) is an elastomer for sealing the gap (80) by the elastic action of said ring member (151) compressing into the gap (80).

9. The gap seal (150) according to claim 8, wherein said elastomer is silicone.

10. The gap seal (150) according to claim 9, wherein said elastomer is 40 to 50 durometer silicone.

11. The gap seal (150) according to claim 8, wherein said ring member (151) is hollow for inflatably expanding said ring member (151) into abutting relation with the bottom corner edge (220) of said closure head flange (60) for sealing the gap (80) thereby.

12. The gap seal (150) according to claim 8, further comprising a vertical gap seal flange (270) integrally connected to the top surface (210) of said ring member (151) for deflecting liquid away from the gap (80), said gap seal flange (270) extending circumferentially around the top surface (210) of said ring member (151).

13. The gap seal (150) according to claim 8, wherein said ring member (151) is unitary.

14. The gap seal (150) according to claim 4, wherein the cross sectional configuration has an inclining outer surface (320) extending upwardly from the outer edge (300).

15. The gap seal (150) according to claim 15, wherein said ring member (151) is hollow for inflatably expanding said ring member (151) into abutting relation with the bottom corner edge (220) of said closure head flange (60) for sealing the gap (80) thereby.

16. A method for temporarily sealing a gap (80) defined by a bottom surface (70) of a reactor presssure vessel closure head flange (60) and an opposing top surface (36) of a reaction pressure vessel lower shell (20), comprising the steps of detaching the closure head (50) from the lower shell (20) for providing access to a reactor core (105) and internal components disposed in the lower shell (20); flooding a reactor cavity upper chamber (2) with water for providing a biological shield to protect personnel from radioactivity emanating from the inside of the lower shell (20); draining the reactor cavity (4) of water; attaching the closure head (150) to the lower shell (20); decontaminating the reactor cavity (4), characterized by the steps of positioning an elastomeric ring-shaped gap seal (150) around the closure head flange 960); inserting the gap seal (150) into the gap (80) for sealing the gap (80) during decontamination of the reactor cavity (4); and removing the gap seal (150) from the gap (80).

17. The method according to claim 16, wherein said step of positioning the ring-shaped gap seal (150) is further characterized by the steps of: removing the closure head (50) from the reactor cavity (4); positioning the gap seal (150) coaxially beneath the closure head flange (60); and upwardly moving the gap seal (150) until the gap seal (150) surrounds the closure head flange (60).

18. The method according to claim 16, wherein said step of inserting the gap seal (150) into the gap (80) comprises the steps of downwardly moving the gap seal (150) until the gap (80) seal surrounds the gap (80); and compressing the gap seal (150) into the gap (80) for sealing the gap (80).

19. The method according to claim 16, wherein said step of removing the gap seal (150) from the gap (80) comprises the steps of cutting-through the gap seal (150); outwardly moving the gap seal (150) away from the gap (80); and removing the gap seal from the reactor cavity.

20. The method according to claim 19, wherein said step of outwardly moving the gap seal (150) away from the gap comprises the steps of engaging the gap seal (150) with a hook; and pulling the hook so that the gap seal (150) is pulled away from the gap (80).

FIG.1

FIG.2

FIG.3

FIG. 4

FIG. 5

## FIG. 6

## FIG. 7

FIG.8

FIG.9

FIG.10